# EUROPÄISCHE PATENTSCHRIFT

(11) **EP 3 378 570 B1**
(45) Veröffentlichungstag und Bekanntmachung des Hinweises auf die Patenterteilung: **11.08.2021**
(21) Anmeldenummer: 18163154.0
(22) Anmeldetag: 21.03.2018
(51) Int. Cl.: B05B 16/20, B05B 1/20, B05B 15/68

(54) **VORBEHANDLUNGSANLAGE**
PRETREATMENT INSTALLATION
INSTALLATION DE PRÉTRAITEMENT

(30) Priorität: 22.03.2017 DE 202017001545 U
(43) Veröffentlichungstag der Anmeldung: 26.09.2018
(73) Patentinhaber: Rippert Besitzgesellschaft mbH & Co. KG, 33442 Herzebrock-Clarholz (DE)
(72) Erfinder: Kreienbaum, Nico, 33442 Herzebrock-Clarholz (DE); Schlesiger, Johannes, 59302 Oelde (DE); Hakenkamp, Niklas, 33442 Herzebrock-Clarholz (DE)
(74) Vertreter: Schober, Mirko

(56) Entgegenhaltungen:
- EP-A1- 2 492 020
- WO-A1-2016/087684
- FR-A1- 2 599 642
- FR-A1- 2 668 401
- GB-A- 873 432

## Beschreibung

Die Erfindung betrifft eine Vorbehandlungsanlage nach dem Oberbegriff des Anspruchs 1.

Unter einer Vorbehandlung im Sinne der vorliegenden Anmeldung sind vorbereitende Oberflächenbehandlungen zu verstehen, die zur Vorbereitung einer mit einem Schichtauftrag verbundenen Oberflächenbehandlung durchgeführt werden. Hierzu zählen insbesondere Entfetten, Phosphatieren, Beizen und Spülen mit demineralisiertem Wasser.

An die Vorbehandlung schließt sich in der Regel zunächst eine Trocknung der Werkstücke an, bevor die Oberflächenbehandlung durchgeführt wird. Bei der Oberflächenbehandlung handelt es sich regelmäßig um eine Lackbeschichtung oder eine Pulverbeschichtung.

Derartige Vorbehandlungsanlagen dienen dazu, Werkstücke, die einer Oberflächenbehandlung unterzogen werden sollen, einer Behandlung mit flüssigen Medien zu unterziehen.

Je nach Einsatzzweck werden derartige Vorbehandlungs-anlagen häufig so konzipiert, dass die Werkstücke verschiedene Vorbehandlungskammern oder einen langen Tunnel durchlaufen. In jeder der Vorbehandlungskammern bzw. in verschiedenen Abschnitten innerhalb des Tunnels wird ein anderer Vorbehandlungsschritt durchgeführt. Dies hat den Vorteil, dass in jeder Kammer bzw. jedem Abschnitt lediglich ein Vorbehandlungsmedium verwendet wird. Die Vorbehandlungsmedien werden in unterhalb des Tunnels oder der Kammern befindlichen Becken gesammelt und wiederverwertet. Dies ist insbesondere deswegen möglich, da in jeder Vorbehandlungskammer bzw. jedem Abschnitt bevorzugt ein einziges Vorbehandlungsmedium zum Einsatz kommt. Eine Vermischung der unterschiedlichen Vorbehandlungsmedien kann somit weitestgehend verhindert werden.

Solche Vorbehandlungsanlagen mit einer Mehrzahl Vorbehandlungskammern oder Abschnitten stellen jedoch eine vergleichsweise hohe Mindestinvestition dar, um die Mehrzahl Vorbehandlungskammern zu realisieren. Ein weiterer Nachteil ist der hohe Platzbedarf, je nach Anforderungen der einzelnen Prozessschritte. Es versteht sich, dass eine derartige Vorbehandlungsanlage nur dann wirtschaftlich sinnvoll betrieben werden kann, wenn ein entsprechend hoher Durchsatz an Werkstücken erzielt wird. Weiterhin müssen die Werkstücke immer die gleichen Vorbehandlungsschritte durchlaufen, damit ein möglichst kontinuierlicher Betrieb der Vorbehandlungsanlage gewährleistet wird. Dies ist jedoch oft nur in Serienproduktionen, die auf hohe Stückzahlen abzielen, der Fall.

In der Praxis ist es oft wünschenswert, dass für kleine Serien oder einzelne Werkstücke eine entsprechende Vorbehandlung durchgeführt werden kann, ohne dass die hohen Investitionskosten für eine Vorbehandlungsanlage des vorgenannten Typs anfallen. Derartige Vorbehandlungsanlagen werden daher so konzipiert, dass eine Mehrzahl Vorbehandlungsschritte in einer einzelnen Kammer durchgeführt werden kann. Hierbei besteht regelmäßig das Problem, die Vorbehandlung unter wirtschaftlichen und ökologischen Gesichtspunkten sinnvoll zu gestalten.

Derartige Vorbehandlungsanlagen weisen regelmäßig Verteilungseinrichtungen auf, um die Vorbehandlungsmedien in der Vorbehandlungskammer zu verteilen. Die Verteilungseinrichtungen verfügen regelmäßig über eine Mehrzahl Abgabeeinrichtungen, die die Vorbereitungsmedien in einen Vorbereitungsbereich im Inneren der Vorbehandlungskammer, in dem sich die vorzubehandelnden Werkstücke befinden, abgeben.

Um eine wirtschaftliche Vorbehandlung zu ermöglichen, muss der Vorbehandlungsbereich eine gewisse Größe aufweisen, um eine hinreichend große Menge Werkstücke für deren gleichzeitige Vorbehandlung aufnehmen zu können. Die Abgabeeinrichtungen werden daher durch eine Verteilungsleitung mit flüssigen Vorbehandlungsmedien versorgt. Die Verteilungsleitung dient dabei unter anderem dazu, die Vorbereitungsmedien in horizontaler Richtung in der Vorbehandlungskammer und insbesondere auf die einzelnen Abgabeeinrichtungen zu verteilen.

In der Praxis ist es jedoch möglich, dass sich Vorbehandlungsmedien in der Verteilungsleitung ansammeln. Hierbei entsteht häufig das Problem, dass die Verwendung unterschiedlicher Vorbehandlungsmedien für hintereinander durchgeführte Vorbehandlungsschritte das Risiko der Verunreinigung eines Vorbehandlungsmediums mit Resten zuvor verwendeter Vorbehandlungsmedien mit sich bringt. Dies kann sich negativ auf die durchzuführende Vorbehandlung auswirken, gegebenenfalls sogar zu Schädigungen der Vorbehandlungsanlage führen. Intensive Spülungen der Leitungen einer Vorbehandlungsanlage werden hierdurch oft notwendig. Diese sind jedoch mit zusätzlichen Kosten verbunden. Diese entstehen im Wesentlichen durch zum Spülen der Leitungen benötigte Medien, deren fachgerechte Entsorgung sowie die für die Spülungen aufzuwendenden Nebenzeiten im Betrieb der Vorbehandlungsanlage.

Aus GB 873 432 A ist eine Vorbehandlungsanlage nach dem Oberbegriff des Anspruchs 1 bekannt. In WO 2016/087684 A1 ist keine Vorbehandlungsanlage, sondern eine Reinigungsanlage zur Reinigung von Gerätschaften zum Versprühen von Pflanzenschutzmitteln bekannt. Dieses gattungsfremde Dokument beschreibt eine Verteilungsleitung in einer Einrichtung, die Ausgabedüsen aufweist. In einer Ausführungsform ist diese Ausgabeeinrichtung horizontal und vertikal verfahrbar.

Der Erfindung liegt die Aufgabe zugrunde, eine Vorbehandlungsanlage zur Verfügung zu stellen, bei der eine Mehrzahl Vorbehandlungsschritte in einer einzigen Vorbehandlungskammer durchgeführt werden kann, bei der die vorstehend geschilderten Nachteile des Standes der Technik nicht oder zumindest in geringerem Umfang auftreten.

Die Aufgabe wird gelöst durch eine Vorbehandlungsanlage mit den Merkmalen des Anspruchs 1. Die Merkmale der abhängigen Ansprüche betreffen vorteilhafte Ausführungsformen.

Erfindungsgemäß wird die Aufgabe dadurch gelöst, dass der Fließweg für flüssige Medien der Verteilungsleitung ein stetiges Gefälle in Richtung einer Entleerungseinrichtung zur Entleerung der Verteilungsleitung aufweist. Ein derartiges stetiges Gefälle des Fließweges führt dazu, dass die Vorbereitungsmedien unter dem Einfluss der Schwerkraft - zumindest weitgehend - restlos in Richtung der Entleerungseinrichtung fließen. Hierdurch kann mittels der Entleerungseinrichtung eine vollständige oder zumindest annähernd vollständige Entleerung der Verteilungsleitung ermöglicht werden. Dabei ist die Verteilungseinrichtung in der Vorbehandlungskammer erfindungsgemäß vertikal verfahrbar. Dadurch wird es möglich, mit einer begrenzten Anzahl Abgabeeinrichtungen einen großen Raumbereich innerhalb der Vorbehandlungskammer zu nutzen. Auch die Verteilungseinrichtung selber kann hierdurch kleiner und kostengünstiger ausgeführt werden, da sie sich lediglich über einen Teil der Höhe der Vorbehandlungskammer erstrecken muss. Gegenüber Vorbehandlungsanlagen mit horizontal verfahrbarer Verteilungseinrichtung ergibt sich bei der vertikalen Fahrweise der Vorteil, dass die Teile wesentlich schneller mit Medien benetzt werden und im Falle einer Benetzung von oben nach unten ein schädliches Antrocknen wesentlich längere Zeit in Anspruch nimmt. Zudem ist die Verteilungseinrichtung ringförmig um den Vorbehandlungsbereich angeordnet. Eine derartige ringförmige Anordnung ermöglicht eine gleichmäßige allseitige Beaufschlagung der sich im Vorbehandlungsbereich befindenden Werkstücke mit dem Vorbehandlungsmedium.

Durch das vertikale Verfahren der Verteilungseinrichtung wird der Vorbehandlungsbereich, also der Bereich in den die Abgabeeinrichtungen die Vorbehandlungsmedien abgeben, im Inneren der Vorbehandlungskammer ebenfalls vertikal bewegt.

Es versteht sich, dass es trotzdem möglich ist, zusätzlich eine Spülung bei einem Wechsel des Vorbereitungsmediums vorzunehmen. Hierbei hat das stetige Gefälle den Vorteil, dass auch das für die Spülung verwendete Medium durch das stetige Gefälle unter dem Einfluss der Schwerkraft in Richtung Entleerungseinrichtung fließt. Hierdurch wird zum einen der Verbrauch des zum Spülen verwendeten Mediums reduziert, zum anderen ist eine Vermischung von Resten des zum Spülen verwendeten Mediums mit dem nach der Spülung verwendeten Vorbehandlungsmedium verhindert oder zumindest weitgehend verhindert.

Das stetige Gefälle des Fließwegs der Verteilungsleitung kann beispielsweise dadurch realisiert werden, dass die Verteilungsleitung selber ein stetiges Gefälle in Richtung der Entleerungseinrichtungen aufweist. Auf diese Weise kann beispielsweise eine Rohrleitung mit einem konstanten Querschnitt verwendet werden, die mit einem entsprechenden Gefälle zur Entleerungseinrichtung hin angeordnet wird.

Die Entleerungseinrichtung muss nicht zwangsläufig an einem Ende der Verteilungsleitung angeordnet sein. Es ist vielmehr ebenfalls möglich, die Entleerungseinrichtung an einem beliebigen Punkt entlang der Verteilungsleitung anzuordnen. Der Fließweg weist dann bevorzugt aus allen Richtungen zur Entleerungseinrichtung hin ein stetiges Gefälle auf. Mit anderen Worten bedeutet dies, dass die Entleerungseinrichtung bevorzugt am tiefsten Punkt des Fließwegs der Medien in der Verteilungsleitung angeordnet ist. Dies lässt sich beispielsweise durch eine Anordnung der Entleerungseinrichtung am tiefsten Punkt der Verteilungsleitung selber realisieren.

In vorteilhafter Weise kann die Vorbehandlungsanlage, insbesondere die Verteilungseinrichtung, eine Mehrzahl Verteilungsleitungen aufweisen. Dies ermöglicht beispielsweise einen alternierenden Betrieb zweier Verteilungsleitungen, wodurch Nebenzeiten, beispielsweise für das Spülen und/oder Entleeren der Verteilungsleitungen, noch weiter reduziert werden können.

Bevorzugt ist die Entleerungseinrichtung dazu ausgebildet, Vorbehandlungsmedien aus der Verteilungsleitung in das Innere der Vorbehandlungskammer abzugeben. Grundsätzlich ist es zwar auch denkbar, die Verteilungsleitungen zu entleeren, indem die Vorbehandlungsmedien beispielsweise in separate Behälter abgeführt werden. Da die Vorbehandlungsmedien im Rahmen der Vorbehandlung jedoch ohnehin in das Innere der Vorbehandlungskammern abgegeben werden, ist es besonders vorteilhaft, wenn die Entleerungseinrichtung die Vorbehandlungsmedien direkt in das Innere der Vorbehandlungskammern abgeben. Hierdurch kann die Entleerungseinrichtung vergleichsweise einfach ausgeführt werden. Im einfachsten Fall kann es sich um eine Absperrarmatur handeln, die zum Entleeren der Verteilungsleitung lediglich geöffnet wird. Insbesondere in Verbindung mit einer vertikal verfahrbaren Verteilungseinrichtung ist eine Entleerung der Verteilungsleitung in das Innere der Vorbehandlungskammer vorteilhaft. Hier entfällt die vergleichsweise umständliche Anbindung der sich bewegenden Verteilungsleitung über die Entleerungseinrichtung.

Bevorzugt sind die Abgabeeinrichtungen, bei denen es sich beispielsweise um Düsen handeln kann, ringförmig um den Vorbehandlungsbereich verteilt angeordnet. Diese Verteilung der Abgabeeinrichtungen begünstigt ebenfalls die gleichmäßige allseitige Beaufschlagung der sich im Vorbehandlungsbereich befindenden Werkstücke.

In diesem Zusammenhang ist es besonders vorteilhaft, wenn die Verteilungsleitung um den Vorbehandlungsbereich ringförmig angeordnet ist. Eine solche Anordnung der Verteilungsleitung ermöglicht in vorteilhafter Weise die Versorgung von über die Verteilungseinrichtung verteilten Abgabeeinrichtungen, insbesondere wenn diese ringförmig um den Vorbehandlungsbereich verteilt angeordnet sind.

Weiterhin ist es vorteilhaft, wenn die Vorbehandlungsanlage eine Mehrzahl Reinigungseinrichtungen zur Reinigung der Vorbehandlungskammern aufweist. Bei diesen Reinigungseinrichtungen kann es sich beispielsweise um Düsen handeln. Derartige Reinigungseinrichtungen ermöglichen es, das Innere der Vorbehandlungskammern zu reinigen bzw. zu spülen.

Die Reinigungseinrichtungen sind hierbei bevorzugt an der Verteilungseinrichtung angeordnet. Dies hat insbesondere in Kombination mit einer verfahrbaren Verteilungseinrichtung den Vorteil, dass mit einer geringen Anzahl Reinigungseinrichtungen das gesamte Innere oder zumindest der größte Teil des Inneren der Vorbehandlungskammer gereinigt bzw. gespült werden kann.

In diesem Zusammenhang ist es besonders vorteilhaft, wenn die Reinigungseinrichtungen derart in der Vorbehandlungsanlage, insbesondere an der Verteilungseinrichtung, angeordnet sind, dass diese ein Reinigungsmedium an die Wände der Vorbehandlungskammern abgeben können. Hierbei kann es sich beispielsweise um in Richtung der Wände der Vorbehandlungskammer ausgerichtete Düsen handeln.

Besonders bevorzugt weist die Vorbehandlungsanlage eine Sammeleinrichtung zum Sammeln der in das Innere der Vorbehandlungskammer abgegebenen Vorbehandlungsmedien auf. Eine solche Sammeleinrichtung hat den Vorteil, dass die gesammelten Vorbehandlungsmedien gegebenenfalls einer Wiederverwendung zugeführt werden können. Die Sammeleinrichtung ist bevorzugt im Bereich des Bodens der Vorbehandlungskammer angeordnet. Besonders bevorzugt handelt es sich bei der Sammeleinrichtung um eine Gestaltung des Bodens mit einem, bevorzugt stetigen, Gefälle zu einer tiefsten Stelle des Bodens der Vorbehandlungskammer hin. Eine solche Gestaltung des Bodens führt dazu, dass sich die Vorbehandlungsmedien und/oder gegebenenfalls Medien zum Reinigen und/oder Spülen der Vorbehandlungskammer im Bereich der tiefsten Stelle des Bodens sammeln.

Die Sammeleinrichtung kann bevorzugt wahlweise mit einer Mehrzahl Behälter verbunden werden. Auf diese Weise können unterschiedliche Vorbehandlungsmedien, Medien zum Spülen und/oder Medien zum Reinigen in getrennten Behältern gesammelt werden. Auf diese Weise fallen die Medien - zumindest weitgehend - unvermischt an, was eine Wiederverwertung bzw. Entsorgung begünstigt.

Zum Verbinden der Sammeleinrichtung mit den einzelnen Behältern weist die Vorbehandlungsanlage bevorzugt eine Verbindungsvorrichtung auf. Der Fließweg für flüssige Medien der Verbindungsvorrichtung ist bevorzugt so gestaltet, dass dieser ein stetiges Gefälle aufweist. Auf diese Weise kann es vermieden werden, dass sich Medien in der Verbindungsvorrichtung ansammeln und so zu einer Verunreinigung anderer Medien führen.

Die Verbindungsvorrichtung weist bevorzugt ein verschwenkbares Verbindungselement auf. Bei diesem kann es sich beispielsweise um ein Rohr handeln. Mit einem solchen verschwenkbaren Verbindungselement lässt sich die wahlweise Verbindbarkeit der Sammeleinrichtung mit den einzelnen Behältern in einfacher Weise realisieren. Hierbei ist das Verbindungselement bevorzugt um eine vertikale Achse drehbar gelagert. Die Drehung des Verbindungselements um eine vertikale Achse erlaubt insbesondere in einfacher Weise die Realisierung eines stetigen Gefälles des Fließweges, unabhängig davon, an welcher Position seines Dreh- bzw. Schwenkbereichs sich das Verbindungselement befindet.

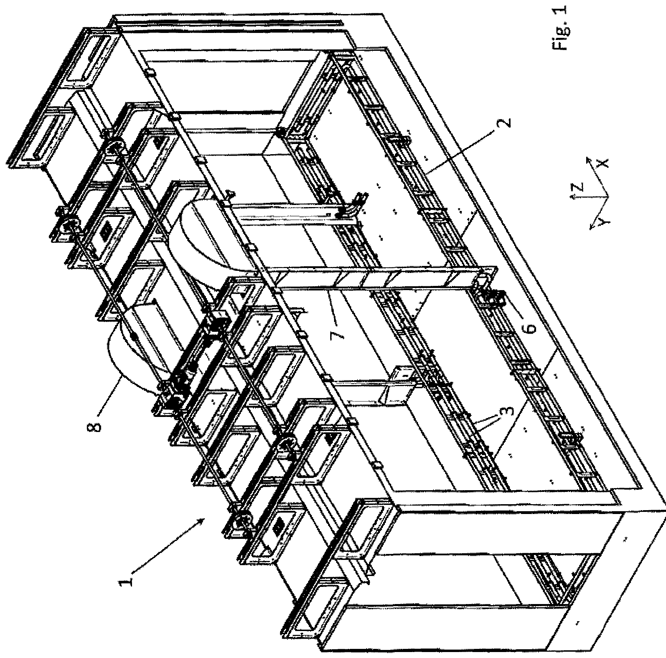

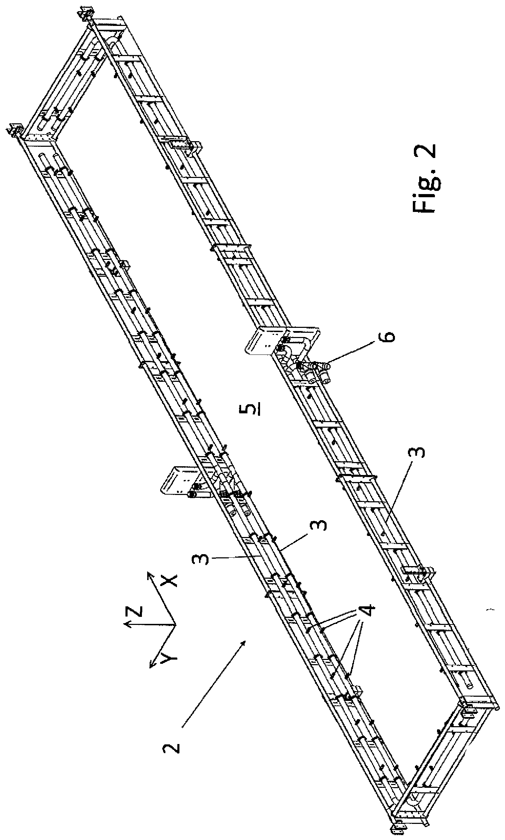

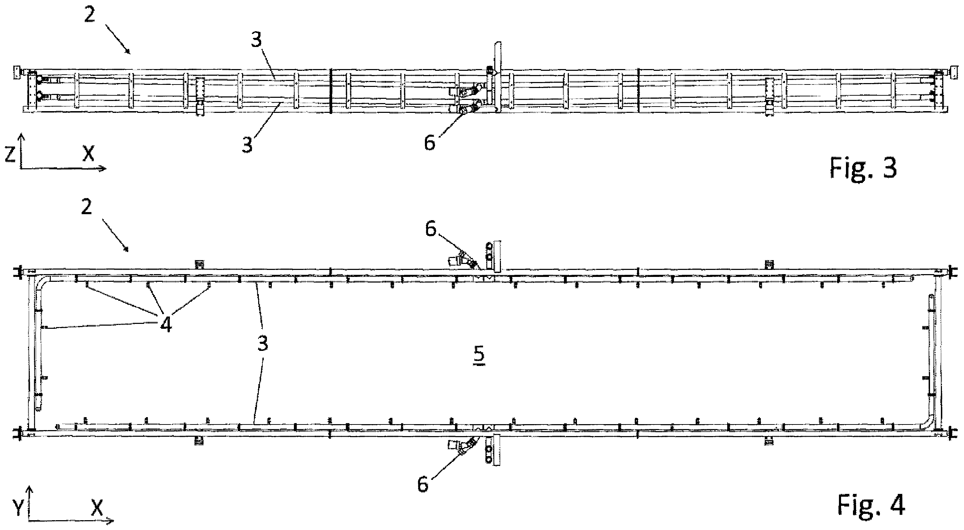

Die Erfindung wird im Folgenden anhand der Figuren 1 bis 4 schematisch näher erläutert.
Fig. 1 zeigt eine perspektivische Darstellung der Vorbehandlungskammer einer beispielhaften erfindungsgemäßen Vorbehandlungsanlage.
Fig. 2 zeigt eine perspektivische Darstellung der Verteilungseinrichtung der in Fig. 1 dargestellten Vorbehandlungskammer.
Fig. 3 zeigt eine Seitenansicht der in Fig. 2 dargestellten Verteilungseinrichtung.
Fig. 4 zeigt eine Draufsicht der in Fig. 2 dargestellten Verteilungseinrichtung.

Die dargestellte beispielhafte Vorbehandlungskammer 1 einer erfindungsgemäßen Vorbehandlungsanlage weist eine Verteilungseinrichtung 2 auf. Die Verteilungseinrichtung 2 dient der Verteilung der Vorbehandlungsmedien in der Vorbehandlungskammer 1. Hierfür weist die Verteilungseinrichtung 2 in vorteilhafter Weise eine Mehrzahl Verteilungsleitungen 3 auf. Die Verteilungsleitungen 3 verteilen die Vorbehandlungsmedien in den horizontalen Richtungen X und Y. Die Verteilungsleitungen 3 versorgen jeweils eine Mehrzahl Abgabeeinrichtungen 4 mit den Vorbehandlungsmedien. Die Abgabeeinrichtungen 4, die im gezeigten Beispiel in vorteilhafter Weise als Düsen ausgeführt sind, geben die Vorbehandlungsmedien in einen Vorbehandlungsbereich 5 ab.

In erfindungsgemäßer Weise weist der Fließweg für flüssige Medien der einzelnen Verteilungsleitungen 3 jeweils ein stetiges Gefälle in Richtung einer Entleerungseinrichtung 6 auf. Die einzelnen Entleerungseinrichtungen 6 dienen jeweils zur Entleerung einer Verteilungsleitung 3. Im gezeigten Beispiel ist das stetige Gefälle des Fließwegs für flüssige Medien der Verteilungsleitungen 3 dadurch gewährleistet, dass die Verteilungsleitungen 3 selbst jeweils ein stetiges Gefälle zur jeweiligen Entleerungseinrichtung 6 hin aufweisen. Das Gefälle der Versorgungsleitungen 3 beträgt im gezeigten Beispiel 0,6°.

In vorteilhafter Weise ist die Verteilungseinrichtung 2 in der Vorbehandlungskammer 1 in der vertikalen Richtung Z verfahrbar. Hierdurch bewegt sich der Vorbehandlungsbereich 5 ebenfalls in vertikaler Richtung Z durch den Raumbereich der Vorbehandlungskammer 1, in dem sich die vorzubehandelnden Werkstücke befinden.

Die einzelnen Entleerungseinrichtungen 6 sind in vorteilhafter Weise dazu ausgebildet, die Vorbehandlungsmedien aus den jeweiligen Verteilungsleitungen 3 in das Innere der Vorbehandlungskammer 1 abzugeben. Die Entleerungseinrichtungen 6 sind im gezeigten Beispiel als Absperrarmaturen ausgebildet, die bevorzugt durch eine geeignete Steuereinrichtung aus der Ferne geöffnet und/ oder geschlossen werden können.

Die Verteilungseinrichtung 2 ist im dargestellten Beispiel bevorzugt ringförmig um den Vorbehandlungsbereich 5 angeordnet. Weiter bevorzugt sind die Verteilungsleitungen 3 ringförmig um den Vorbehandlungsbereich 5 angeordnet. Die Abgabeeinrichtunen 4 sind in vorteilhafter Weise ringförmig um den Vorbehandlungsbereich 5 verteilt angeordnet.

Zur Versorgung der Verteilungseinrichtung 2 mit Vorbehandlungsmedien und gegebenenfalls elektrischer Energie, beispielsweise zum Versorgen der Entleerungseinrichtungen 6, weist die beispielhafte Vorbehandlungsanlage Versorgungseinrichtungen 7 auf. Die Versorgungseinrichtungen 7 sind im gezeigten Beispiel in vorteilhafter Weise mittels flexibler Leitungen ausgeführt, die mittels Umlenkeinrichtungen 8 in ihrer Bewegung geführt werden, wenn die Verteilungseinrichtung 2 in vertikaler Richtung Z verfahren wird.

## Patentansprüche

1. Vorbehandlungsanlage zur Durchführung von Vorbehandlungen von Werkstücken für Oberflächenbehandlungen, mit einer Vorbehandlungskammer (1) zur Aufnahme der Werkstücke während der Vorbehandlung und einer Verteilungseinrichtung (2) zur Verteilung von Vorbehandlungsmedien in der Vorbehandlungskammer (1), wobei die Verteilungseinrichtung (2) eine Verteilungsleitung (3) zur Verteilung von Vorbehandlungsmedien in horizontaler Richtung (X, Y) aufweist, wobei die Verteilungsleitung (3) eine Mehrzahl Abgabeeinrichtungen (4) zur Abgabe der Vorbehandlungsmedien in einen Vorbehandlungsbereich (5) im Inneren der Vorbehandlungskammer (1) aufweist, wobei der Fließweg für flüssige Medien der Verteilungsleitung (3) ein stetiges Gefälle in Richtung einer Entleerungseinrichtung (6) zur Entleerung der Verteilungsleitung (3) aufweist,
**dadurch gekennzeichnet,**
**dass** die Verteilungseinrichtung (2) in der Vorbehandlungskammer (1) vertikal verfahrbar ist, wobei die Verteilungseinrichtung (2) ringförmig um den Vorbehandlungsbereich (5) angeordnet ist.

2. Vorbehandlungsanlage nach Anspruch 1,
**dadurch gekennzeichnet,**
**dass** die Vorbehandlungsanlage, insbesondere die Verteilungseinrichtung (2), eine Mehrzahl Verteilungsleitungen (3) aufweist.

3. Vorbehandlungsanlage nach einem der vorigen Ansprüche,
**dadurch gekennzeichnet,**
**dass** die Entleerungseinrichtung (6) dazu ausgebildet ist, Vorbehandlungsmedien aus der Verteilungsleitung (3) in das Innere der Vorbehandlungskammer (1) abzugeben.

4. Vorbehandlungsanlage nach einem der vorigen Ansprüche,
**dadurch gekennzeichnet,**
**dass** es sich bei den Abgabeeinrichtungen (4) um Düsen handelt.

5. Vorbehandlungsanlage nach einem der vorigen Ansprüche,
**dadurch gekennzeichnet,**
**dass** die Abgabeeinrichtungen (4) ringförmig um den Vorbehandlungsbereich (5) verteilt angeordnet sind.

6. Vorbehandlungsanlage nach einem der vorigen Ansprüche,
**dadurch gekennzeichnet,**
**dass** die Verteilungsleitung (3) und/oder die Mehrzahl Verteilungsleitungen (3) ringförmig um den Vorbehandlungsbereich (5) angeordnet sind.

7. Vorbehandlungsanlage nach einem der vorigen Ansprüche,
**dadurch gekennzeichnet,**
**dass** die Vorbehandlungsanlage, insbesondere die Verteilungseinrichtung (2), eine Mehrzahl Reinigungseinrichtungen, insbesondere Reinigungsdüsen, zur Reinigung der Vorbehandlungskammer (1) aufweist.

8. Vorbehandlungsanlage nach Anspruch 7,
**dadurch gekennzeichnet,**
**dass** die Reinigungseinrichtungen derart in der Vorbehandlungsanlage, insbesondere an der Verteilungseinrichtung (2), angeordnet sind, dass sie ein Reinigungsmedium an die Wände der Vorbehandlungskammer (1) abgeben können.

9. Vorbehandlungsanlage nach einem der vorigen Ansprüche,
**dadurch gekennzeichnet,**
**dass** die Vorbehandlungsanlage eine Sammeleinrichtung zum Sammeln der in das Innere der Vorbehandlungskammer (1) abgegebenen Vorbehandlungsmedien und/oder Reinigungsmedien aufweist.

10. Vorbehandlungsanlage nach Anspruch 9,
**dadurch gekennzeichnet,**
**dass** die Sammeleinrichtung wahlweise mit einer Mehrzahl Behälter verbunden werden kann.

11. Vorbehandlungsanlage nach Anspruch 10,
**dadurch gekennzeichnet,**
**dass** zum wahlweisen Verbinden der einzelnen Behälter mit der Sammeleinrichtung eine Verbindungsvorrichtung vorgesehen ist.

12. Vorbehandlungsanlage nach Anspruch 11,
**dadurch gekennzeichnet,**
**dass** der Fließweg für flüssige Medien der Verbindungsvorrichtung ein stetiges Gefälle aufweist.

13. Vorbehandlungsanlage nach Anspruch 11 oder 12,
**dadurch gekennzeichnet,**
**dass** die Verbindungsvorrichtung ein verschwenkbares Verbindungselement, insbesondere ein Rohr, aufweist.

14. Vorbehandlungsanlage nach Anspruch 13,
**dadurch gekennzeichnet,**
**dass** das Verbindungselement um eine vertikale Achse drehbar gelagert ist.

## Claims

1. Pretreatment installation for carrying out pretreatments of workpieces for surface treatments, with a pretreatment chamber (1) for receiving the workpieces during the pretreatment, and a distributor unit (2) for distributing the pretreatment media in the pretreatment chamber (1), wherein the distributor unit (2) comprises a distribution line (3) for distributing the pretreatment media in the horizontal direction (X, Y), wherein the distribution line (3) comprises a plurality of dispensing devices (4) for dispensing the pretreatment media into a pretreatment region (5) inside the pretreatment chamber (1), wherein the flow path for the liquid media of the distribution line (3) has a constant drop towards the emptying device (6) for emptying the distribution line (3), **characterised in that** the distributor unit (2) can be moved vertically in the pretreatment chamber (1) wherein the distributor unit (2) is arranged in a ring around the pretreatment region (5).

2. Pretreatment installation according to claim 1 **characterised in that** the pretreatment installation, in particular the distributor unit (2), comprises a plurality of distribution lines (3).

3. Pretreatment installation according to one of the preceding claims **characterised in that** the emptying device (6) is configured to dispense pretreatment media from the distribution line (3) into the interior of the pretreatment chamber (1).

4. Pretreatment installation according to one of the preceding claims **characterised in that** the dispensing devices (4) are nozzles.

5. Pretreatment installation according to one of the preceding claims **characterised in that** the dispensing devices (4) are arranged spread out in a ring around the pretreatment region (5).

6. Pretreatment installation according to one of the preceding claims **characterised in that** the distribution line (3) and/or the plurality of distribution lines (3) is/are arranged in a ring around the pretreatment region (5).

7. Pretreatment installation according to one of the preceding claims **characterised in that** the pretreatment installation, in particular the distributor unit (2), comprises a plurality of cleaning devices, in particular cleaning nozzles, for cleaning the pretreatment chamber (10.

8. Pretreatment installation according to claim 7 **characterised in that** the cleaning devices are arranged in the pretreatment installation, in particular on the distributor unit (2), in such a way that they can dispense a cleaning medium to the walls of the pretreatment chamber (1).

9. Pretreatment installation according to one of the preceding claims, **characterised in that** the pretreatment installation comprises a collecting unit for collecting the pretreatment media and/or cleaning media which are dispensed into the interior of the pretreatment chamber (1).

10. Pretreatment installation according to claim 9 **characterised in that** the collecting unit can be connected selectively to a plurality of containers.

11. Pretreatment installation according to claim 10 **characterised in that** a connecting device is provided for selectively connecting the individual containers to the collecting unit.

12. Pretreatment installation according to claim 11, **characterised in that** the flow path for the liquid media to the connecting device has a constant drop.

13. Pretreatment installation according to claim 11 or 12 **characterised in that** the connecting device has a pivotable connecting element, in particular a tube.

14. Pretreatment installation according to claim 13 **characterised in that** the connecting element is mounted in a rotatable manner about a vertical axis.

## Revendications

1. Installation de prétraitement pour la réalisation des prétraitements de pièces pour des traitements de surface, avec une chambre de prétraitement (1) pour recevoir les pièces pendant le prétraitement, et un dispositif de répartition (2) pour répartir des milieux de prétraitement dans la chambre de prétraitement (1), dans laquelle le dispositif de répartition (2) comporte une ligne de répartition (3) pour répartir des milieux de prétraitement dans une direction horizontale (X, Y), dans laquelle la ligne de répartition (3) comporte une pluralité de moyens de déchargement (4) pour décharger des milieux de prétraitement dans une zone de prétraitement (5) à l'intérieur de la chambre de prétraitement (1), dans laquelle le chemin d'écoulement pour des milieux liquides de la ligne de répartition (3) comporte une inclinaison continue dans une direction d'un moyen de vidange (6) pour vider la ligne de répartition (3),
**caractérisé en ce**
**que** le dispositif de répartition (2) est déplaçable verticalement dans la chambre de prétraitement (1), dans lequel le dispositif de répartition (2) est agencé de façon annulaire autour de la zone de prétraitement (5).

2. Installation de prétraitement selon la revendication 1,
**caractérisé en ce**
**que** l'installation de prétraitement, surtout le dispositif de répartition (2), comporte une pluralité de lignes de répartition (3).

3. Installation de prétraitement selon l'une quelconque des revendications précédentes,
**caractérisé en ce**
**que** le moyen de vidange (6) est conçu pour décharger des milieux de prétraitement à partir de la ligne de répartition (3) dans l'intérieur de la chambre de prétraitement (1).

4. Installation de prétraitement selon l'une quelconque des revendications précédentes,
**caractérisé en ce**
**que** les moyens de déchargement (4) sont des buses.

5. Installation de prétraitement selon l'une quelconque des revendications précédentes,
**caractérisé en ce**
**que** les moyens de déchargement (4) sont agencés de façon annulaire autour de la zone de prétraitement (5).

6. Installation de prétraitement selon l'une quelconque des revendications précédentes,
**caractérisé en ce**
**que** la ligne de répartition (3) et/ou la pluralité de lignes de répartition (3) sont agencées de façon annulaire autour de la zone de prétraitement (5).

7. Installation de prétraitement selon l'une quelconque des revendications précédentes,
**caractérisé en ce**
**que** l'installation de prétraitement, surtout le dispositif de répartition (2), comporte une pluralité de dispositifs de nettoyage, surtout des buses de nettoyage, pour le nettoyage de la chambre de prétraitement (1).

8. Installation de prétraitement selon la revendication 7,
**caractérisé en ce**
**que** les dispositifs de nettoyage sont agencés dans l'installation de prétraitement, surtout au dispositif de répartition (2), de manière à ce que qu'ils puissent fournir un milieu de nettoyage aux parois de la chambre de prétraitement (1).

9. Installation de prétraitement selon l'une quelconque des revendications précédentes,
**caractérisé en ce**
**que** l'installation de prétraitement comporte un dispositif collecteur pour collecter des milieux de prétraitement et/ou des milieux de nettoyage déchargés à l'intérieur de la chambre de prétraitement (1).

10. Installation de prétraitement selon la revendication 9,
**caractérisé en ce**
**que** le dispositif collecteur peut être raccordé facultativement à une pluralité de récipients.

11. Installation de prétraitement selon la revendication 10,
**caractérisé en ce**
**qu'**un dispositif de raccordement est prévu pour le raccordement facultatif des récipients individuels au dispositif collecteur.

12. Installation de prétraitement selon la revendication 11,
**caractérisé en ce**
**que** le chemin d'écoulement pour des milieux liquides du dispositif de raccordement comporte une inclinaison continue.

13. Installation de prétraitement selon la revendication 11 ou 12,
**caractérisé en ce**
**que** le dispositif de raccordement comporte un élément de raccordement pivotant, surtout un tube.

14. Installation de prétraitement selon la revendication 13,
**caractérisé en ce**
**que** l'élément de raccordement est monté rotatif autour d'un axe vertical.
